# EUROPÄISCHE PATENTSCHRIFT

(11) **EP 0 450 466 B1**
(45) Veröffentlichungstag und Bekanntmachung des Hinweises auf die Patenterteilung: **06.09.1995**
(21) Anmeldenummer: 91104761.1
(22) Anmeldetag: 26.03.1991
(51) Int. Cl.: B32B 17/10, G08B 13/04

(54) **Alarmglasscheibe aus Verbundglas**
Multilayered alarm glass plate
Vitre d'alarme à plusieurs couches

(30) Priorität: 31.03.1990 DE 4010421
(43) Veröffentlichungstag der Anmeldung: 09.10.1991
(73) Patentinhaber: VEGLA Vereinigte Glaswerke GmbH, D-52066 Aachen (DE); SAINT-GOBAIN VITRAGE, 92400 Courbevoie (FR)
(72) Erfinder: Sistig, Helmut, W-5100 Aachen (DE); Hermens, Ulrich, W-5100 Aachen (DE)
(74) Vertreter: Biermann, Wilhelm, Dr.-Ing.

(56) Entgegenhaltungen:
- DE-U- 8 906 162
- FR-A- 2 101 618

## Beschreibung

Die Erfindung betrifft eine Alarmglasscheibe aus Verbundglas, bei der eine der die Verbundglasscheibe bildenden Einzelglasscheiben aus vorgespanntem Glas besteht und auf der an der thermoplastischen Zwischenschicht anliegenden Oberflaeche als Signalgeber eine Leiterschleife aus einer Einbrennfarbe oder eine transparente Leitschicht, sowie mit der Leiterschleife bzw. mit der Leitschicht in elektrischer Verbindung stehende Loetanschlussflaechen aufweist.

Bei einer bekannten Alarmglasscheibe dieser Art ist die mit eine Alarmleiterschlife versehene Einzelglasscheibe entlang einer Kante groesser als die andere Einzelglasscheibe, und die Loetanschlussflaechen sind auf dem vorstehenden Randstreifen der stufenfoermig ausgebildeten Verbundglasscheibe angeordnet (DE 36 37 989 C2). Die zu der elektrischen Auswerteschaltung fuehrenden Zuleitungsdraehte werden nach Fertigstellung der Verbundglasscheibe mit den Loetanschlussflaechen verloetet.

Bei einer anderen bekannten Alarmglasscheibe der eingangs genannten Art sind die Loetanschlussflaechen unmittelbar in zwei Eckbereichen der mit einer transparenten Leitschicht versehenen Glasscheibe angeordnet, und die mit dieser Glasscheibe verbundene zweite Glasscheibe weist abgeschraegte Ecken auf, so dass die Loetanschlussflaechen auch in diesem Fall nach Fertigstellung der Verbundglasscheibe zum Anloeten der elektrischen Kabel zugaenglich sind (DE 37 16 766 A1).

Nachteilig bei diesen bekannten Alarmglasscheiben ist, dass eine der die Verbundglasscheibe bildenden Einzelglasscheiben vorstehende Teile oder einen vorstehenden Randstreifen aufweist. Das erfordert besondere zusaetzliche Massnahmen beim Einbau der Alarmglasscheiben. Insbesondere aber wird die Herstellung der Verbundglasscheibe selbst insoweit erschwert, als die Einzelglasscheiben verschiedene Abmessungen bzw. unterschiedliche Formen aufweisen, was mit zusaetzlichen Arbeitsgaengen und/oder mit von der ueblichen Arbeitsweise abweichenden Arbeitsschritten bei der Herstellung der Verbundglasscheibe verbunden ist. Da ausserdem bei den bekannten Alarmglasscheiben der genannten Gattung die zur elektrischen Auswerteschaltung fuehrenden Zuleitungen unmittelbar mit den Stromanschlussflaechen der fertigen Verbundglasscheibe verloetet werden, kann es bei dem Loetvorgang zu einer schaedlichen Erwaermung der thermoplastischen Zwischenschicht kommen.

Es sind ferner auch Alarmglasscheiben aus Verbundglas mit einer transparenten leitenden Schicht auf einer der thermoplastischen Zwischenschicht benachbarten Oberflaeche einer Einzelglasscheibe bekannt, bei denen die die Verbundglasscheibe bildenden Einzelglasscheiben die gleichen Abmessungen haben (DE 17 04 618 82). In diesem Fall sind aber die Anschlussleitungen in Form von flexiblen Flachlitzen seitlich aus der Verbundglasscheibe herausgefuehrt. Die aus der Verbundglasscheibe seitlich herausgefuehrten Anschlussleitungen stoeren jedoch bei der Herstellung und beim Transport der Verbundglasscheiben. Ferner besteht die Gefahr, dass sie beim Manipulieren der Verbundglasscheiben, insbesondere beim Stapeln und beim Transport, durch die scharfen Kanten der Glasscheiben abgeschert oder beschaedigt werden. Wenn die Anschlussleitungen nicht mehr vorhanden oder unbrauchbar geworden sind, muss die Verbundglasscheibe insgesamt verworfen werden.

Der Erfindung liegt die Aufgabe zugrunde, eine Alarmglasscheibe aus Verbundglas der eingangs genannten Art so auszubilden, dass der fuer die Herstellung von Verbundglasscheiben uebliche Fabrikationsprozess uebernommen werden kann, und dass die Verbundglasscheibe ausserdem waehrend der Herstellung und waehrend des Transports bis zum Einbauort keine ueber die Glasflaechen bzw. ueber die Umfangsflaechen ueberstehenden Anschlussleitungen aufweist, so dass die Gefahr einer Beschaedigung oder Zerstoerung der Anschlussleitungen sicher vermieden wird.

Gemaess der Erfindung wird diese Aufgabe dadurch geloest, dass die die Verbundglasscheibe bildenden Einzelglasscheiben gleiche Abmessungen aufweisen, dass die thermoplastische Zwischenschicht im Bereich der Loetanschlussflaechen und in einem sich hieran jeweils anschliessenden Bereich eine Randaussparung aufweist, und dass mit den Loetanschlussflaechen gerade Abschnitte aus steifem Draht in paralleler Anordnung zu einer Kante der Glasscheibe verloetet sind, die waehrend der Weiterverarbeitung dieser Glasscheibe zu der Verbundglasscheibe und anschliessend bis zum Einbau der Alarmglasscheibe in dieser parallel zur Kante der Glasscheibe verlaufenden Anordnung verbleiben. Vorteilhafterweise bestehen die geraden Drahtabschnitte aus massivem Metalldraht.

Bei der erfindungsgemaessen Alarmglasscheibe sind also die Anschlussleitungen in Form von Abschnitten aus steifem Draht bereits auf den Loetanschlussflaechen der vorgespannten Einzelglasscheibe aufgeloetet, bevor die Weiterverarbeitung dieser die Alarmschleife tragenden Einzelglasscheibe zu der Verbundglasscheibe erfolgt. Auf diese Weise wird vermieden, dass der Loetvorgang an der fertigen Verbundglasscheibe unmittelbar auf der Glasscheibe erfolgt, was wegen der starken Erwaermung leicht zu einer Schaedigung der thermoplastischen Zwischenschicht fuehrt. Gleichzeitig wird dadurch, dass massive Drahtabschnitte aufgeloetet werden, die nicht ueber die Kanten der Glasscheibe ueberstehen, sondern auf der Oberflaeche der Glasscheibe insbesondere in einer zur Kante der Glasscheibe parallelen Ausrichtung angeordnet sind, ereicht, dass ein mechanisch stabiles Gebilde geschaffen wird. Die so vorbereitete Einzelglasscheibe kann auf diese Weise problemlos die weiteren Fertigungsschritte fuer die Herstellung der Verbundglasscheibe, insbesondere auch einen automatischen Waschvorgang, durchlaufen, ohne dass die bereits aufgeloeteten Drahtabschnitte dabei stoeren. Erst unmittelbar vor dem Einsetzen der Alarmglasscheibe an der Baustelle werden die beiden Drahtabschnitte mit einem geeigneten Hilfsmittel aus dem durch die Aussparung der Zwischenschicht gebildeten Hohlraum herausgebogen, so dass ihre Enden nun fuer die Verbindung mit den Zuleitungen zu der Auswerteschaltung zur Verfuegung stehen.

Weitere Vorteile und Einzelheiten der Erfindung ergeben sich aus den Unteranspruechen und aus der nachfolgenden Beschreibung eines bevorzugten Ausfuehrungsbeispiels anhand der Zeichnungen.

Von den Zeichnungen zeigt
- Fig. 1: den eine Alarmschleife tragenden Eckbereich einer erfindungsgemaessen Verbundglasscheibe in einer teilweise aufgebrochenen perspektivischen Darstellung, und
- Fig. 2: den Eckbereich nach Vorbereitung der Verbundglasscheibe zum Anloeten der zur Auswerteschaltung fuehrenden Leitungen.

Die erfindungsgemaesse Verbundglasscheibe umfasst eine Glasscheibe 1 aus thermisch vorgespanntem Silikatglas, eine Glasscheibe 2 aus vorzugsweise nicht vorgespanntem Silikatglas, und eine thermoplastische Zwischenschicht 3 aus Polyvinylbutyral oder einem anderen klar durchsichtigen Polymer, mit der die beiden Glasscheiben 1 und 2 fest und dauerhaft verklebt sind. Die thermoplastische Zwischenschicht 3 hat eine Dicke von 0,7 bis 3 mm, vorzugsweise von 1,5 bis 3 mm. Bei einem Einbruchsversuch erschwert diese thermoplastische Zwischenschicht 3 den Einbruch, so dass die Verbundglasscheibe nicht nur die Funktion als Alarmscheibe hat, sondern gleichzeitig als einbruchhemmende Scheibe dient.

Als Signalgeber dient in diesem Fall eine Alarmschleife 4, die in einem Eckbereich der vorgespannten Glasscheibe 1 angeordnet ist. Die Alarmschleife 4 besteht aus einem elektrisch leitenden Email, das mit Hilfe des Siebdruckverfahrens in der gewuenschten Gestalt auf die Glasoberflaeche aufgedruckt und im Zuge des Vorspannprozesses der Glasscheibe 1 eingebrannt wird. Anstelle der dargestellten Alarmschleife aus einem eingebrannten Email kann die Oberflaeche der Glasscheibe 1 an dieser Stelle auch mit einer flaechigen transparenten Leitschicht versehen sein. Wenn die vorgespannte Glasscheibe 1, die im eingebauten Zustand der Verbundglasscheibe auf derjenigen Seite angeordnet ist, von der ein Einbruch zu erwarten ist, bei einem Einbruchversuch zerbricht, zerfaellt sie insgesamt in kleine Bruchstuecke, so dass die Alarmschleife 4 unterbrochen wird.

An den beiden Enden der Leiterschleife 4 ist jeweils eine Loetflaeche 5 bzw. 6 angeordnet, und zwar jeweils in unmittelbarer Naehe der Kante der Glasscheibe. Im Fall einer Leiterschleife aus einem eingebrannten Email bestehen die Loetflaechen 5 und 6 aus demselben Material wie die Leiterschleife 4 und werden zusammen mit der Leiterschleife 4 aufgedruckt. Falls als Signalgeber eine transparente Duennschicht vorgesehen ist, koennen die Loetflaechen gegebenenfalls als zusaetzliche Materialschichten auf der transparenten Duennschicht angeordnet sein.

Auf den Loetflaechen 5 und 6 ist jeweils ein einige Zentimeter langer Drahtabschnitt 7 bzw. 8 aus einem massivem Metalldraht, beispielsweise aus einem Kupferdraht, aufgeloetet. Der Durchmesser des verwendeten Metalldrahtes richtet sich nach der Dicke der Zwischenschicht 3 und ist geringer als diese, beispielsweise 0,6 mm bei einer Dicke der Zwischenschicht 3 von 0,76 mm. Die Drahtabschnitte 7,8 bestehen aus geraden Abschnitten und sind parallel zu der jeweils benachbarten Kante der Glasscheibe 1 angeordnet. Die vorderen Enden 7' und 8 'der Drahtabschnitte enden im Abstand von einigen Millimetern voneinander, so dass man spaeter ein spitzes Werkzeug zwischen die beiden Drahtenden einfuehren und die bei den Drahtabschnitte nach aussen biegen kann.

Die thermoplastische Zwischenschicht 3 ist im Eckbereich mit einer Aussparung 10 versehen, deren Groesse und Gestalt so bemessen ist, dass die Drahtabschnitte 7,8 einschliesslich der Loetflaechen 5,6 und der Loetverbindung der Drahtabschnitte mit den Loetflaechen innerhalb des so gebildeten Hohlraumes Platz finden. Mit der Zwischenschicht 3 ist auf der anderen Seite die Glasscheibe 2 verbunden, die aus nicht vorgespanntem Glas besteht und die dieselben Abmessungen hat wie die vorgespannte Glasscheibe 1, so dass die Verbundglasscheibe mit Hilfe der bestehenden Fertigungsanlangen ohne Aenderung der Verfahrensschritte hergestellt werden kann.

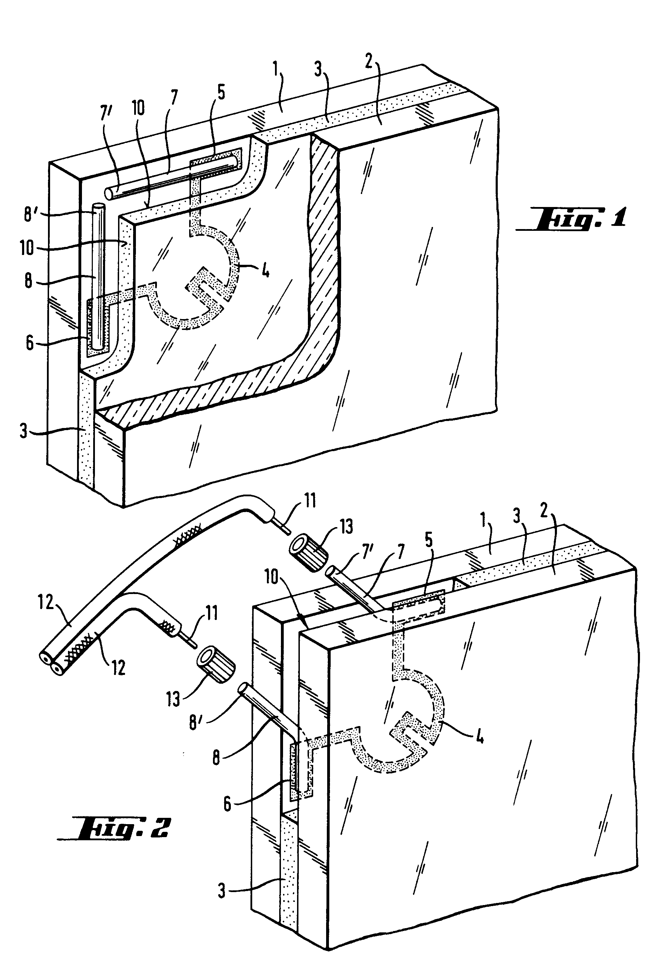

Die Drahtabschnitte 7,8 bleiben in der in Fig. 1 dargestellten Lage, bis an der Baustelle der Anschluss an die elektrische Alarmschaltung erfolgt. Dann werden sie, wie bereits erwaehnt, mit Hilfe eines geeigneten Werkzeugs aus dem Hohlraum zwischen den bei den Glasscheiben herausgebogen. Die Verbindung mit den beiden Adern 11 des zu der Alarmschaltung fuehrenden Kabels 12 erfolgt ueber geeignete Loetverbinder 13 mit Hilfe einer Heissluftpistole, wobei die Loetstelle bei dem Loetvorgang gleichzeitig mit einem Schrumpfschlauch isoliert und abgedichtet wird.

## Patentansprüche

1. Alarmglasscheibe aus Verbundglas, bei der eine der die Verbundglasscheibe bildenden Einzelglasscheiben aus vorgespanntem Glas besteht und auf der an der thermoplastischen Zwischenschicht anliegenden Oberflaeche als Signalgeber eine Leiterschleife aus einer Einbrennfarbe oder eine transparente Leitschicht, sowie mit der Leiterschleife bzw. mit der Leitschicht in elektrischer Verbindung stehende Loetanschlussflaechen aufweist, **dadurch gekennzeichnet,** dass die die Verbundglasscheibe bildenden Einzelglasscheiben (1,2) gleiche Abmessungen aufweisen, dass die thermoplastische Zwischenschicht (3) im Bereich der Loetanschlussflaechen (5,6) und in einem sich hieran jeweils anschliessenden Bereich eine Randaussparung (10) aufweist, und dass mit den Loetanschlussflaechen (5,6) gerade Abschnitte (7,8) aus steifem Draht in paralleler Anordnung zu einer Kante der Glasscheibe verloetet sind, die waehrend der Weiterverarbeitung dieser Glasscheibe (1) zu der Verbundglasscheibe und anschliessend bis zum Einbau der Alarmglasscheibe in dieser parallel zur Kante der Glasscheibe verlaufenden Anordnung verbleiben.

2. Alarmglasscheibe nach Anspruch 1, dadurch gekennzeichnet, dass die Drahtabschnitte (7,8) aus massivem Draht bestehen.

3. Alarmglasscheibe nach Anspruch 1 oder 2, dadurch gekennzeichnet, dass die Drahtabschnitte (7,8) aus 0,6 bis 1,5 mm dickem Kupferdraht bestehen und eine Laenge von 3 bis 6 cm aufweisen.

4. Alarmglasscheibe nach einem der Ansprueche 1 bis 3, dadurch gekennzeichnet, dass die thermoplastische Zwischenschicht (3) aus Polyvinylbutyral besteht und eine Dicke von 1,5 bis 3 mm aufweist.

5. Alarmglasscheibe nach einem der Ansprueche 1 bis 4, dadurch gekennzeichnet, dass zwei Loetanschlussflaechen (5,6) in einem Eckbereich der Glasscheibe (1) vorgesehen sind, wobei der eine Drahtabschnitt (7) parallel zu der einen Kante und der andere Drahtabschnitt (8) parallel zu der anderen Kante der Glasscheibe (1) in diesem Eckbereich angeordnet sind.

## Claims

1. Alarm glass pane of laminated glass, in which one of the individual glass panes forming the laminated glass pane consists of prestressed glass and has, on the surface contacting the thermoplastic intermediate layer, a conductor loop of an annealing colour or a transparent conductor layer as signal transmitter, as well as solder connection surfaces standing in electrical connection with the conductor loop or with the conductor layer, characterised thereby that the individual glass panes (1, 2) forming the laminated glass pane have the same dimensions, that the thermoplastic layer (3) has an edge recess (10) in the region of the solder connecting surfaces (5, 6) and in a region respectively adjoining thereat, and that straight portions (7, 8) of stiff wire are soldered to the solder connecting surfaces (5, 6) in parallel arrangement to an edge of the glass pane, which portions remain in this arrangement running parallel to the edge of the glass pane during further processing of this glass pane (1) into the laminated glass pane and subsequently until installation of the alarm glass pane.

2. Alarm glass pane according to claim 1, characterised thereby that the wire portions (7, 8) consist of solid wire.

3. Alarm glass pane according to claim 1 or 2, characterised thereby that the wire portions (7, 8) consist of copper wire 0.6 to 1.5 millimetres thick and have a length of 3 to 6 centimetres.

4. Alarm glass pane according to one of clais 1 to 3, characterised thereby that the thermoplastic intermediate layer (3) consists of polyvinylbutyral and has a thickness of 1.5 to 3 millimetres.

5. Alarm glass pane according to one of claims 1 to 4, characterised thereby that two solder connecting surfaces (5, 6) are provided in a corner region of the glass pane (1), wherein one wire portion (7) is arranged parallel to one edge, and the other wire portion (8) parallel to the other edge, of the glass pane (1) in this corner region.

## Revendications

1. Vitrage d'alarme en verre feuilleté dans lequel une des feuilles de verre individuelles formant le vitrage en verre feuilleté est faite d'un verre trempé et présente, sur la surface en contact avec la couche intermédiaire thermoplastique, à titre de détecteur d'alarme, une boucle d'interconnexion en une encre à cuire ou une couche conductrice transparente ainsi que des plages de connexion à souder reliées électriquement à la boucle d'interconnexion ou à la couche conductrice, caractérisé en ce que les feuilles de verre individuelles (1, 2) formant le vitrage feuilleté présentent des dimensions identiques, que la couche intermédiaire thermoplastique (3) présente une échancrure marginale (10) dans la région des plages de connexion à souder (5, 6) et dans une région qui y est respectivement adjointe, et que des segments droits (7, 8) de fil métallique rigide sont soudés aux plages de connexion à souder (5, 6) dans une disposition parallèle à un bord du vitrage, ces segments restant dans cette disposition parallèle au bord du vitrage pendant le traitement ultérieur de ce vitrage (1) pour réaliser le vitrage en verre feuilleté et ensuite jusqu'à l'installation du vitrage d'alarme.

2. Vitrage d'alarme suivant la revendication 1, caractérisé en ce que les segments de fil (7, 8) sont faits d'un fil massif.

3. Vitrage d'alarme suivant la revendication 1 ou 2, caractérisé en ce que les segments de fil (7, 8) sont faits d'un fil de cuivre d'un calibre de 0,6 à 1,5 mm et ont une longueur de 3 à 6 cm.

4. Vitrage d' alarme suivant l'une quelconque des revendications 1 à 3, caractérisé en ce que la couche intermédiaire thermoplastique (3) est en butyralpolyvinylique et présente une épaisseur de 1,5 à 3 mm.

5. Vitrage d'alarme suivant l'une quelconque des revendications 1 à 4, caractérisé en ce que deux plages de connexion à souder (5, 6) sont prévues dans une région de coin du vitrage (1), le premier segment de fil (7) étant disposé parallèlement au premier bord et l'autre segment de fil (8), parallèlement à l'autre bord du vitrage (1), dans cette région de coin.
